# EUROPEAN PATENT SPECIFICATION

(11) **EP 4 015 841 B1**
(45) Date of publication and mention of the grant of the patent: **20.09.2023**
(21) Application number: 20215992.7
(22) Date of filing: 21.12.2020
(51) Int. Cl.: F16B 2/00, F16B 43/00, F16B 27/00, F16B 39/22

(54) **PROCESS FOR MAKING A CONNECTING ELEMENT FOR THE FRICTION-INCREASING CONNECTION OF COMPONENTS, AND USE OF A CONNECTING ELEMENT**
VERFAHREN ZUR HERSTELLUNG EINES VERBINDUNGSELEMENTS ZUR REIBUNGSERHÖHENDEN VERBINDUNG VON BAUTEILEN UND VERWENDUNG EINES VERBINDUNGSELEMENTS
PROCÉDÉ DE FABRICATION D'UN ÉLÉMENT DE CONNEXION AUGMENTANT LA FRICTION DE CONNEXION DE COMPOSANTS ET UTILISATION D'UN ÉLÉMENT DE CONNEXION

(43) Date of publication of application: 22.06.2022
(73) Proprietor: 3M Innovative Properties Company, Saint Paul, MN 55133-3427 (US)
(72) Inventor: Grimm, Florian, 87439 Kempten (DE); Peterhansl, Volker, 88085 Langenargen (DE); Rudolph, Roman, 87490 Haldenwang (Börwang) (DE); Allebrandt, Daniel, 87437 (DE)
(74) Representative: Mössner, Brigitte

(56) References cited:
- EP-A1- 2 848 824
- WO-A1-2015/082365
- GB-A- 1 119 747
- JP-A- H06 147 206
- US-A1- 2006 042 051

## Description

### Technical Field

The present disclosure relates to a process for making a connecting element for the friction-increasing connection of components to be joined.

### Background

Force-locked connections are frequently used in all areas of machine, plant and motor vehicle construction and energy generation for the transmission of forces or torques. The size of the force which can be respectively transmitted depends not only on the structural design but also primarily on the static friction value (coefficient of static friction) of the component surfaces connected to one another. Therefore, in the case of such force-locked connections, it is endeavored to provide friction-increasing measures that allow the greatest possible transverse forces and torques to be transmitted safely. Further, force-locked connections may also be referred to as non-positive connections or frictional connections.

It is known to use friction-increasing interlayers to increase the holding forces or increase the torques than can be transmitted in bolted and clamped connections. US 6,347,905 B1 discloses a connecting element for the friction-increasing play-free reversible connection of components to be joined. The connecting element comprises a spring-elastic steel foil which bears on its surface particles of a defined size, which are fixed on the spring-elastic foil by means of a binder phase. The particles consist of a hard material, preferably of diamond, cubic boron nitride, aluminum oxide, silicon carbide or boron carbide. By using this separate connecting element, the coefficient of static friction can be increased in frictional connections.

Such connecting elements, used for friction-increasing connection of two components to be joined, are generally produced by an electroless plating process. A metal substrate, e.g. a steel foil, is coated with hard particles and a metallic binder in an electroless coating bath. For this coating process, the metal substrates are placed on suitable carriers or racks to ensure a defined distance between different metal substrates and a uniform coating of the metal substrate.

WO 2015/082365 A1 discloses a layer arrangement for connecting components.

With the trend towards smaller and more compact products and the need for very small connecting elements having a diameter of only several millimeters, e.g. for automotive electrification or applications in the electronic industry that require friction enhancement, on the one hand racking becomes very difficult or almost impossible, while on the other hand production cost is very high as only a relatively small number of metal substrates can be produced with one batch of coating bath. This is due to the volume needed for the racks which is relatively large compared to the size of the very small connecting elements, resulting in an inefficient use of the coating bath volume.

There is a need to improve the process for making connecting elements for the friction-increasing connection of components, to allow production of connecting elements having a small size with diameters of only up to about 10 mm.

As used herein, the term "comprise" shall include also the terms "consist essentially of" and "consists of".

### Summary

In a first aspect, the present disclosure relates to a wound roll of connecting elements, the wound roll comprising a continuous metal strip comprising
(i) a support structure,
(ii) a plurality of connecting elements, and
(iii) a plurality of extensions being directed out of the plane of the metal strip;
wherein each connecting element is associated with at least one holding arm integrally linking the connecting element to at least one of
(a) the support structure and
(b) one or more other connecting elements;

and wherein the wound roll comprises a plurality of individual windings of the metal strip, and wherein each individual winding is adjacent to and kept at a distance from an adjacent individual winding by the extensions of the metal strip;
and wherein each connecting element comprises a metal substrate having a first joining surface on one side of the substrate and a second joining surface on an opposite side of the substrate, wherein each joining surface comprises hard particles fixed on the metal substrate by a binder layer.

In another aspect, the present disclosure also relates to a process for producing such a wound roll of connecting elements, the process comprising
(a) providing a metal strip having a first surface on one side of the metal strip and a second surface on an opposite side of the metal strip,
(b) machining the metal strip, to form a metal strip comprising
   (i) a support structure,
   (ii) a plurality of metal substrates, each individual metal substrate being a metal substrate for a connecting element, and
   (iii) a plurality of extensions,
      wherein each metal substrate is associated with at least one holding arm integrally linking the metal substrate to at least one of
      (A) the support structure and
      (B) one or more other metal substrates;
      and wherein the plurality of extensions is provided on at least one of the two opposite surfaces of the metal strip, and wherein each extension is directed out of the plane of the metal strip,
(c) rolling up the metal strip to a wound roll, wherein the wound roll comprises a plurality of individual windings of the metal strip, and wherein each individual winding is adjacent to and kept at a distance from an adjacent individual winding by the extensions of the metal strip, and
(d) fixing hard particles on the first and the second surface of the metal strip with a binder layer, to form the wound roll of connecting elements.

The process disclosed herein may further comprise
(e) separating each connecting element from the support structure or from one or more other connecting elements, to form a plurality of individual connecting elements.

In yet a further aspect, the present disclosure also relates to the use of a connecting element made from a wound roll as disclosed herein to connect a first component and a second component to be joined in machine, plant or motor vehicle construction, in energy generation, or in microelectronic or mircromechanic equipment.

With the process disclosed herein, very small connecting elements having a diameter of only several millimeters, e.g. diameters of only up to 10 mm or up to 5 mm or even smaller, can be produced. The connecting elements produced by the process disclosed herein can be used for friction-increasing connection of two components to be joined, e.g. for automotive electrification or applications in the electronic industry.

Due to the plurality of extensions by which each individual winding of the wound roll is kept at a distance from an adjacent individual winding of the wound roll, a defined distance between individual connecting elements and a uniform coating of the wound roll of connecting elements is ensured.

With the process disclosed herein, also connecting elements having a diameter larger than 10 mm can be produced, for example connecting elements having a diameter of up to 20 mm, or up to 30 mm, or more.

Furthermore, with the process disclosed herein also connecting elements can be produced that have one or more extensions which are directed out of the plane of each connecting element and which are used for pre-assembly of the connecting element to one of the two components to be frictionally joined by the connecting element. The extensions directed out of the plane of the connecting element are outside of the first and second joining surfaces of the connecting element, and they are shaped in such a way that they display an elastic or springy property which makes possible a reversible attachment, and thus a pre-assembly, of the connecting element on one of the two components to be frictionally joined by the connecting element. For these connecting elements having one or more extensions directed out of the plane of the connecting element for pre-assembly, the handling related to the racking process for individual connecting elements would be very labor-intensive, whereas racking is not required for the production process disclosed herein. These connecting elements with extensions directed out of the plane of the connecting element for pre-assembly typically have a small to medium size with a diameter of typically between 25 and 55 mm, and may also have a diameter of less than 25 mm or more than 55 mm.

By using a connecting element produced by the process disclosed herein, the coefficient of static friction of frictional connections is increased.

### Brief description of the drawings

The present disclosure is explained in more detail on the basis of the drawings, in which
Figures 1A - 1G schematically show a continuous metal strip of the present disclosure and a connecting element made from the metal strip,
Figures 2A - 2G schematically show a continuous metal strip of the present disclosure and a connecting element made from the metal strip, and
Figures 3A - 3F schematically show various views of a wound roll of the present disclosure, the wound roll being rolled up from the continuous metal strip of Figures 1A - 1G, and
Figure 4 schematically shows a cross-sectional view of a connecting element made from a wound roll of the present disclosure.

### Detailed Description

An individual connecting element of the wound roll of the present disclosure comprises a metal substrate having a first joining surface on one side of the substrate and a second joining surface on an opposite side of the substrate. Each joining surface comprises hard particles fixed on the metal substrate by a binder layer.

The hard particles preferably consist of a material which, under the particular conditions of use, does not react chemically either with the materials of the components to be joined or with environmental media. It is preferably an inorganic material.

Preferably, the hard particles are selected from the group consisting of silicon carbide, aluminum oxide, boron carbide, cubic boron nitride, and diamond. More preferably, diamonds are used as hard particles.

The size of the hard particles is selected in such a way that the damage to the joining surfaces caused by the particles being pressed into the surface does not reach an impermissible level. Preferably, this is ensured if the particle diameter is not greater than about three times the peak-to-valley height of the joining surfaces, which peak to valley results from machining of the joining surfaces. A mean particle size of 100 µm (d₅₀) or less generally fulfils this requirement. For example, hard particles with a mean particle size (d₅₀) of 10 µm, 25 µm, 35 µm, 55 µm or 75 µm can be used. In some embodiments, hard particles with a mean particle size (d₅₀) from 10 to 75 µm are used, or from 25 to 55 µm. The mean particle size can be measured by laser diffraction (Cilas, wet measurement).

The hard particles should have a narrow grain size range in which the scatter about a given nominal diameter amounts to no more than about +/- 50%. In some embodiments, the scatter about a given nominal diameter should not amount to more than about +/-25%.

The number of hard particles per unit surface area of the joining surfaces of the connecting element may be selected in such a way that the normal force which is available for joining the components together is sufficient to ensure that the particles are pressed into the surface of the components to be joined. This will generally be the case if the area percentage of the joining surfaces of the connecting element which is covered with hard particles is from 3% to 80%. The area percentage of the joining surfaces of the connecting element which is covered with hard particles can be selected dependent on the mean particle size (d₅₀) of the hard particles. For example, for a mean particle size (d₅₀) of the hard particles of 10 µm from about 8% to 20% of the joining surfaces of the connecting element may be covered with hard particles, for a mean particle size (d₅₀) of 25 µm the area percentage may be from about 8% to 25%, and for a mean particle size (d₅₀) of 35 µm, the area percentage may be from about 10% to 30%, for a mean particle size (d₅₀) of 55 µm, the area percentage may be from about 20% to 60%.

The metal substrate may be made from steel, for example from unalloyed steel. Also high-alloy steel or stainless steel can be used. Examples for unalloyed steel are grade C75S - 1.1248 according to DIN EN 10132-4 or grade C60S - 1.1211 according to DIN EN 10132-4.

Typically, the thickness of the metal substrate is from 0.01 to 1 mm. The thickness of the metal substrate is selected depending on the application. In some embodiments, the thickness of the metal substrate is up to 1.0 mm. In other embodiments, the thickness is up to 0.5 mm. In some other embodiments, the thickness is up to 0.2 mm, in some other embodiments, the thickness is up to 0.1 mm.

The binder layer may be a metallic binder layer or a polymeric binder layer.

The polymeric material of the polymeric binder layer may be selected from the group consisting of epoxy materials, acrylic materials, polyester materials, polyurethane materials, formaldehyde resins, polyvinyl acetate (PVAC) materials, polyvinylchloride (PVC) materials, alkyd resins, silicone materials, rubber materials, fluoropolymers and combinations thereof.

Preferably, the binder layer is a metallic binder layer. The metallic binder layer may comprise nickel.

The thickness of the binder layer may be from 2 to 70 µm, or from 5 to 50 µm, or from 5 to 30 µm.

In some embodiments, the thickness of the binder layer is not more than 80% of the mean particle size (d₅₀) of the hard particles. In some other embodiments, the thickness of the binder layer is not more than 60% of the mean particle size (d₅₀) of the hard particles. In yet some other embodiments, the thickness of the binder layer is not more than 20% of the mean particle size (d₅₀) of the hard particles. The thickness of the binder layer may be at least 2 µm. The hard particles are protruding from the binder layer. When the connecting element is in frictional engagement with the components to be joined, the hard particles are pressed into the surfaces of the components to be joined, therefore increasing the coefficient of friction of the connection.

The wound roll of connecting elements disclosed herein comprises a continuous metal strip comprising (i) a support structure, (ii) a plurality of connecting elements, and (iii) a plurality of extensions being directed out of the plane of the metal strip. In the wound roll, each connecting element is associated with at least one holding arm integrally linking the connecting element to at least one of (a) the support structure and (b) one or more other connecting elements. In other words, the wound roll is a structure of a plurality of connecting elements that are integrally linked by a holding arm either directly to each other or to a common support structure. In the wound roll, there is a plurality of individual holding arms, and each connecting element is associated with at least one holding arm. By the holding arms, the individual connecting elements are linked to either the support structure or to one or more other connecting elements.

By "integrally linked" it is meant that the wound roll is made of one single piece of metal strip, and that the support structure, the plurality of connecting elements and the plurality of extensions being directed out of the plane of the metal strip are altogether made of one piece, where the connecting elements are integrally linked, i.e. integrally connected, to the support structure or to one or more other connecting elements by the holding arms.

At least one of the individual connecting elements is associated with at least one holding arm integrally linking the connecting element to the support structure. This will ensure the integrity of the wound roll. Typically, more than one of the individual connecting elements are associated with at least one holding arm integrally linking the connecting element to the support structure.

For example, each connecting element may be associated with a holding arm integrally linking the connecting element to the support structure. The individual connecting elements may be further associated with one or two or more further holding arms integrally linking the connecting element to one or two or more other connecting elements. It is also possible that each individual connecting element is associated with only one holding arm integrally linking the connecting element only to the support structure.

It is also possible that some of the individual connecting elements are associated with a holding arm integrally linking the connecting element to the support structure and are further associated with one or more further holding arms integrally linking the connecting element to one or more other connecting elements, while some other of the individual connecting elements are associated with only one holding arm integrally linking the connecting element only to the support structure, while some even other of the individual connecting elements are associated with one or more holding arms integrally linking the connecting element only to one or more other connecting elements.

In some embodiments, the support structure may comprise a plurality of holding arms or may consist of a plurality of holding arms integrally linking each individual connecting element to one or more other connecting elements.

The metal strip comprises a plurality of extensions being directed out of the plane of the metal strip.

The wound roll comprises a plurality of individual windings of the metal strip. Each individual winding is adjacent to and kept at a distance from an adjacent individual winding by the extensions of the metal strip.

The metal strip of the wound roll of the present disclosure has a first surface on one side of the metal strip and a second surface on an opposite side of the metal strip. Each individual holding arm of the metal strip has a cross section that is perpendicular to the first and the second surface of the metal strip. A minimum cross-sectional area of each individual holding arm may be between 0.005 and 10 mm², or between 0.2 and 2 mm². With "minimum cross-sectional area" it is meant that the cross-sectional area of a cross section is measured along the length of the individual holding arm, and the minimum cross-sectional area is the cross-sectional area of the cross section having the smallest cross-sectional area along the length of the individual holding arm.

Typically, the holding arms have a minimum cross-sectional area in a middle position of the holding arm between the two connecting elements that are integrally linked by the holding arm. At a position near the connecting elements, the holding arms typically have a larger cross-sectional area than in a middle position, as they are formed with a smooth transition from the holding arm to the connecting element. This smooth transition is advantageous for the manufacturing of the metal strip.

A minimum width of each individual holding arm measured on the first or the second surface of the metal strip may be between 0.1 and 10 mm, or between 0.2 and 5 mm, or between 0.3 and 3 mm. With "minimum width" it is meant that the width of the individual holding arm measured on the first or the second surface of the metal strip is measured along the length of the individual holding arm, and the minimum width is the smallest width along the length of the individual holding arm.

Typically, the holding arms have a minimum width in a middle position of the holding arm between the two connecting elements that are integrally linked by the holding arm. At a position near the connecting elements, the holding arms typically have a larger width than in a middle position, as they are formed with a smooth transition from the holding arm to the connecting element. This smooth transition is advantageous for the manufacturing of the metal strip.

The width of each individual holding arm measured on the first or the second surface of the metal strip may be selected depending on the dimensions of the connecting elements. A metal strip may have individual holding arms with each of them having the same width, or with different holding arms having different widths.

The length of each individual holding arm measured on the first or the second surface of the metal strip may be selected depending on the dimensions of the connecting elements.

A metal strip may have individual holding arms with each of them having the same length, or with different holding arms having different lengths. The length of an individual holding arm should not be too large in order to not unnecessarily increase the size, i.e. the width or the length, of the metal strip. Typically, the length of an individual holding arm is smaller than the diameter of the circumscribing circle of the individual connecting element with which the individual holding arm is associated. The length of an individual holding arm may be, for example, between 0.1 and 20 mm, or between 0.1 and 10 mm, or between 0.2 and 5 mm, or between 0.3 and 3 mm. In some embodiments, the length of some of the individual holding arms may be as large as or larger than the diameter of the circumscribing circle of the individual connecting element with which the individual holding arm is associated. The diameter of the circumscribing circle of the individual connecting element may be, for example, up to 10 mm, or up to 20 mm, or up to 30 mm, or larger.

Typically, the thickness of the metal strip of the wound roll disclosed herein is from 0.04 to 1.2 mm.

The thickness of the metal strip is selected depending on the application of the connecting element. In some embodiments, the thickness of the metal strip is up to 1.2 mm. In other embodiments, the thickness is up to 0.5 mm. In some other embodiments, the thickness is up to 0.2 mm, in some other embodiments, the thickness is up to 0.1 mm. The thickness of the metal strip may be from 0.04 to 1.2 mm, or from 0.1 to 1.0 mm, or from 0.04 to 0.5 mm, or from 0.1 to 0.5 mm, or from 0.04 to 0.2 mm, or from 0.1 to 0.2 mm, or from 0.04 to 0.1 mm.

The thickness of the metal strip is measured in a direction perpendicular to the plane of the metal strip, without the plurality of extensions being directed out of the plane of the metal strip. The thickness of the metal strip typically is constant over the whole metal strip, i.e. the thickness of the metal strip is the same at each individual position of the metal strip.

The plurality of extensions of the metal strip is directed out of the plane of the metal strip. The plurality of extensions may be directed out of the plane of the metal strip in a direction enclosing an angle of at least 20°, or of at least 45°, or of at least 90°, or of at least 135°, with the plane of the metal strip. Preferably, the plurality of extensions may be directed out of the plane of the metal strip in a direction perpendicular to the plane of the metal strip, i.e. in a direction enclosing an angle of 90° with the plane of the metal strip. The plurality of extensions of the metal strip may extend from the first or from the second surface of the metal strip.

The individual extensions of the plurality of extensions of the metal strip directed out of the plane of the metal strip may extend from the support structure or from a connecting element. For example, all of the individual extensions of the plurality of extensions may extend from the support structure. It is also possible that at least one individual extension is extending from each of the individual connecting elements. It is also possible that some of the individual extensions extend from the support structure, while some other of the individual extensions extend from one or more of the individual connecting elements.

An individual connecting element of the metal strip of the wound roll may be a flat element, which means that the individual connecting element does not have any extensions directed out of the plane of the connecting element. If all individual connecting elements of the metal strip are flat elements, each individual extension of the plurality of extensions of the metal strip extends from the support structure.

An individual connecting element of the metal strip of the wound roll may also be a 3D shaped element, which means that the individual connecting element has a number of extensions, for example one, two, three or more extensions, directed out of the plane of the connecting element. These extensions of the individual connecting element can be used for pre-assembling the connecting element, i.e. for joining the connecting element to one of the two components to be frictionally joined by the connecting element. The extensions directed out of the plane of a 3D shaped connecting element are outside of the first and second joining surfaces of the connecting element, and they are shaped in such a way that they display an elastic or springy property which makes possible a reversible attachment, and thus a pre-assembly, of the connecting element on one of the two components to be frictionally joined by the connecting element. If one or more individual connecting elements of the metal strip are 3D shaped elements, the extensions of these connecting elements can be used as some of the individual extensions of the plurality of extensions of the metal strip. It is also possible that all of the individual connecting elements of the metal strip are 3D shaped elements. In this case, the extensions of the connecting elements can be used as extensions of the metal strip. Some further extensions of the plurality of extensions of the metal strip may extend from the support structure, but it is also possible that each individual extension of the plurality of extensions of the metal strip extends from a connecting element, i.e. from a 3D shaped connecting element.

If the support structure comprises a plurality of holding arms or consists of a plurality of holding arms integrally linking each individual connecting element to one or more other connecting elements, the plurality of extensions of the metal strip which are directed out of the plane of the metal strip may extend from the individual connecting elements or from the individual holding arms.

In the wound roll of connecting elements as disclosed herein, each individual winding of the wound roll is adjacent to and kept at a distance from an adjacent individual winding by the extensions of the metal strip.

In the wound roll of connecting elements disclosed herein, each individual winding of the wound roll may be kept at a constant distance to the adjacent windings. It is also possible that the distance between adjacent windings is not constant.

The distance between adjacent individual windings of the wound roll may be at least one time the thickness of the metal strip. The distance between adjacent individual windings of the wound roll may also be at least five times, or at least ten times, or at least fifty times, or at least hundred times the thickness of the metal strip. The distance between adjacent individual windings of the wound roll typically is at most two hundred times the thickness of the metal strip. The distance between adjacent individual windings of the wound roll is to be understood as the distance between the plane of the metal strip in adjacent individual windings. The distance between adjacent individual windings of the wound roll depends on the length of the extensions of the metal strip and on the angle which the extensions of the metal strip enclose with the plane of the metal strip, as the extensions of an individual winding of the wound roll contact an adjacent winding of the wound roll.

Further disclosed herein is also a process for producing a wound roll of connecting elements as disclosed herein, the process comprising
(a) providing a metal strip having a first surface on one side of the metal strip and a second surface on an opposite side of the metal strip,
(b) machining the metal strip, to form a metal strip comprising
   (i) a support structure,
   (ii) a plurality of metal substrates, each individual metal substrate being a metal substrate for a connecting element, and
   (iii) a plurality of extensions,
      wherein each metal substrate is associated with at least one holding arm integrally linking the metal substrate to at least one of
      (A) the support structure and
      (B) one or more other metal substrates;
      and wherein the plurality of extensions is provided on at least one of the two opposite surfaces of the metal strip, and wherein each extension is directed out of the plane of the metal strip,
(c) rolling up the metal strip to a wound roll, wherein the wound roll comprises a plurality of individual windings of the metal strip, and wherein each individual winding is adjacent to and kept at a distance from an adjacent individual winding by the extensions of the metal strip, and
(d) fixing hard particles on the first and the second surface of the metal strip with a binder layer, to form the wound roll of connecting elements.

The metal strip used for rolling up to the wound roll typically is a metal sheet having a thickness of from 0.01 to 1 mm. The metal strip may be made from steel, for example from unalloyed steel. Also, high-alloy steel or stainless steel can be used. Examples for unalloyed steel are grade C75S - 1.1248 according to DIN EN 10132-4 or grade C60S - 1.1211 according to DIN EN 10132-4.

The metal strip has a first surface on one side of the metal strip and a second surface on an opposite side of the metal strip.

By machining of the metal strip, a metal strip is formed which comprises (i) a support structure, (ii) a plurality of metal substrates, and (iii) a plurality of extensions. Each individual metal substrate is a metal substrate for a connecting element. Machining can be done, for example, by punching or stamping or die cutting, or by laser cutting, or by waterjet cutting, or by electrical discharge machining (EDM), and by subsequent bending. The plurality of extensions directed out of the plane of the metal strip are typically formed by bending. Bending can be done manually or semi-manually or in an automated process. A typical process for machining of the metal strip is a combined stamping and bending process.

In the formed metal strip, each metal substrate is associated with at least one holding arm integrally linking the metal substrate to at least one of (A) the support structure and (B) one or more other metal substrates.

At least one of the individual metal substrates is associated with at least one holding arm integrally linking the metal substrate to the support structure. This will ensure the integrity of the metal strip. Typically, more than one of the individual metal substrates are associated with at least one holding arm integrally linking the metal substrate to the support structure.

For example, each metal substrate may be associated with one holding arm integrally linking the metal substrate to the support structure. Each metal substrate may also be associated with more than one holding arm integrally linking the metal substrate to the support structure and to one or more other metal substrate. Each metal substrate may also be associated with one or more holding arms integrally linking the metal substrate to one or more other metal substrates.

It is also possible that some of the individual metal substrates are associated with a holding arm integrally linking the metal substrate to the support structure and are further associated with one or more further holding arms integrally linking the metal substrate to one or more other metal substrates, while some other of the individual metal substrates are associated with only one holding arm integrally linking the metal substrate only to the support structure, while some even other of the individual metal substrates are associated with one or more holding arms integrally linking the metal substrate only to one or more other metal substrates.

In some embodiments, the support structure may comprise a plurality of holding arms or may consist of a plurality of holding arms integrally linking each individual metal substrate to one or more other metal substrates.

Each individual holding arm has a minimum width and a minimum cross-sectional area as described above in more detail.

The plurality of extensions of the metal strip is provided on at least one of the two opposite surfaces of the metal strip. Each extension is directed out of the plane of the metal strip.

The plurality of extensions may be directed out of the plane of the metal strip in a direction enclosing an angle of at least 20°, or of at least 45°, or of at least 90°, or of at least 135°, with the plane of the metal strip. Preferably, the plurality of extensions may be directed out of the plane of the metal strip in a direction perpendicular to the plane of the metal strip, i.e. in a direction enclosing an angle of 90° with the plane of the metal strip. The plurality of extensions of the metal strip may extend from the first or from the second surface of the metal strip.

The individual extensions of the plurality of extensions of the metal strip directed out of the plane of the metal strip may extend from the support structure or from a metal substrate. For example, all of the individual extensions of the plurality of extensions may extend from the support structure. It is also possible that at least one individual extension is extending from each of the individual metal substrate. It is also possible that some of the individual extensions extend from the support structure, while some other of the individual extensions extend from one or more of the individual metal substrates.

If the support structure comprises a plurality of holding arms or consists of a plurality of holding arms integrally linking each individual metal substrate to one or more other metal substrates, the plurality of extensions of the metal strip which are directed out of the plane of the metal strip may extend from the individual metal substrates or from the individual holding arms.

After the metal strip has been machined, the metal strip is rolled up to a wound roll. The wound roll comprises a plurality of individual windings of the metal strip. Each individual winding is adjacent to and kept at a distance from an adjacent individual winding by the extensions of the metal strip.

The length of the metal strip of the wound roll is not particularly limited and may be selected appropriate to the requirements of the production process, for example the size of the coating bath used for fixing the hard particles on the first and the second surface of the metal strip with a binder layer. The length of the metal strip may be, for example 10 m, or 50 m, or 100 m. Typically, the metal strip is rolled up to a wound roll on a suitable carrier.

After the metal strip has been machined and rolled up, then in a further process step, hard particles are fixed on the first and the second surface of the metal strip with a binder layer.

By fixing the hard particles on the first and second surfaces of the metal strip with a binder layer, from each metal substrate a connecting element is formed. By fixing hard particles on the first and second surfaces of the metal strip with a binder layer, the wound roll of connecting elements is formed.

The hard particles and the binder layer are described above in more detail.

If the binder layer is a polymeric binder layer, the hard particles may be fixed on the first and second surfaces of the metal strip with a polymeric binder layer by cathodic dip coating.

If the binder layer is a metallic binder layer, the hard particles may be fixed on the first and second surfaces of the metal strip with a metallic binder layer by an electroless plating process, or by an electroplating process.

For example, the hard particles may be fixed on the first and second surfaces of the metal strip with a metallic binder layer by an external current-fee (= chemical) electroplating process, also called electroplating process, preferably by an electroless nickel plating process, using a chemical nickel coating bath with dispersed hard particles. Such electroplating processes are customary in coating technology. The chemical nickel layer can be hardened by means of a heat treatment at up to about 400 °C, with the result that the adhesion to the metal strip substrate is improved and the inherent hardness of the metallic binder layer is increased.

Advantageously, several individual wound rolls may be placed next to each other in the coating bath.

After fixing hard particles on the first and second surfaces of the metal strip with a binder layer, the metal strip of the wound roll typically has a thickness of from 0.04 to 1.2 mm.

The process disclosed herein for producing a wound roll of connecting elements may further comprise
(e) separating each connecting element from the support structure or from one or more other connecting elements, to form a plurality of individual connecting elements.

After the wound roll of connecting elements has been obtained by fixing hard particles on the first and second surfaces of the metal strip with a binder layer, the individual connecting elements can be separated from the support structure or from one or more other connecting elements.

The separation of an individual connecting element from the support structure or from one or more other connecting elements may be done at the holding arms to which the individual connecting element is associated with, or at the connecting element. For example, an individual connecting element may be separated from the support structure or from one or more other connecting elements at a position at the end of the holding arm to which the connecting element is integrally linked, i.e. at the transition zone from the holding arm to the connecting element. It is also possible to separate an individual connecting element from the support structure or from one or more other connecting elements at a position of the connecting element, for example at a position of up to 1 mm inwards from an outer contour of the connecting element.

Preferably, each connecting element is separated from the support structure or from one or more other connecting elements at the holding arms.

Typically, each connecting element is separated from the support structure or from one or more other connecting elements at the holding arms outside of the transition zones of the holding arms to the connecting element.

More preferably, each connecting element is separated from the support structure or from one or more other connecting elements at the holding arms at a position having a minimum width of the individual holding arm.

The separation of the individual connecting elements may be carried out manually by breaking off the individual connecting elements at the holding arms, or by an automated process such as punching or stamping, or by laser cutting, or by waterjet cutting, or by electrical discharge machining (EDM).

By separating each connecting element from the support structure or from one or more other connecting elements, a plurality of individual connecting elements is obtained.

After separation of the individual connecting elements from the support structure or from one or more other connecting elements, each individual connecting element of the plurality of connecting elements typically comprises a at least one portion of a holding arm which is extending from the connecting element. The at least one portion of a holding arm which is extending from the connecting element is extending in the plane of the connecting element. The at least one portion of a holding arm which is extending from the connecting element results from the production of the connecting element from the wound roll of connecting elements, where the connecting element had been integrally linked to the support structure or to another connecting element by at least one holding arm, and from each one of these at least one holding arms a portion remains with the connecting element after separation.

Such a portion of a holding arm which is extending from the connecting element typically is relatively small compared to the size of the connecting element. Typically, the length of a portion of a holding arm which is extending from the connecting element after separation is between 0.2 and 30%, preferably between 0.2 and 10% of the diameter of the circumscribing circle of the connecting element.

If an individual connecting element is associated with only one holding arm integrally linking the connecting element to the support structure or to another connecting element, then after separation of the individual connecting element from the support structure or from the other connecting element, the individual connecting element comprises only one portion of a holding arm which is extending from the connecting element.

If an individual connecting element is associated with more than one holding arm integrally linking the connecting element to the support structure or to one or more other connecting elements, then after separation of the individual connecting element from the support structure or from one or more other connecting elements, the individual connecting element comprises more than one portion of a holding arm which is extending from the connecting element. This means that from each of the holding arms to which the individual connecting element is associated with in the wound roll, there will remain a portion of each of the holding arms with the connecting element after separation of the connecting element from the support structure or from one or more other connecting elements.

The one or more portions of a holding arm which are extending from the connecting element after separation of the connecting element from the support structure or from one or more other connecting elements are outside of the first and second joining surfaces of the connecting element.

After separation of the individual connecting elements from the support structure or from one or more other connecting elements, each individual connecting element of the plurality of connecting elements comprises at least one separation edge. The separation edge is located at the portion of the holding arm which is extending from the connecting element. The separation edge is a result the separation of the individual connecting elements from the support structure or from one or more other connecting elements. The individual connecting element comprises a zone which is located at the separation edge with the metal substrate not comprising hard particles fixed on each joining surface of the metal substrate with a binder layer, i.e. this zone is not coated by hard particles fixed by a binder layer.

The zone which is located at the separation edge and which is not coated by hard particles fixed by a binder layer comprises the separation edge. The separation edge is perpendicular or largely perpendicular to the first and second joining surfaces of the connecting element. The zone which is located at the separation edge and which is not coated by hard particles fixed by a binder layer may further comprise portions of the first or second surfaces of the connecting element which are very close to the separation edge, as these portions of the coating may have peeled off by separating the connecting element from the support structure or from one or more other connecting elements. These portions of the zone at the separation edge which are not coated by hard particles fixed by a binder layer and which are on the first or second surfaces of the connecting element are relatively small compared to the total surface area of the first or second surface of the connecting element. Typically, the total surface area of the zone which is located at the separation edge and which is not coated by hard particles fixed by a binder layer amounts to at most 10%, or at most 5%, or at most 3%, or at most 2%, or at most 1% of the total surface area of the first or second surface of the connecting element. As the total surface area of the zone at the separation edge which is not coated by hard particles fixed by a binder layer is relatively small, it is ensured that the friction-enhancing function of the connecting element is not adversely affected.

The connecting element made from a wound roll as disclosed herein may be used in a process for frictionally-coupling a first component and a second component with the connecting element, the process comprising
providing a connecting element made from a wound roll as disclosed herein,
pressing the hard particles of the first joining surface of the connecting element into the component joining surface of the first component, and
pressing the hard particles of the second joining surface of the connecting element into the component joining surface of a second component,
thereby frictionally-coupling the first component and the second component with the connecting element.

Various embodiments of the connecting element according to the present disclosure are shown in the drawings.

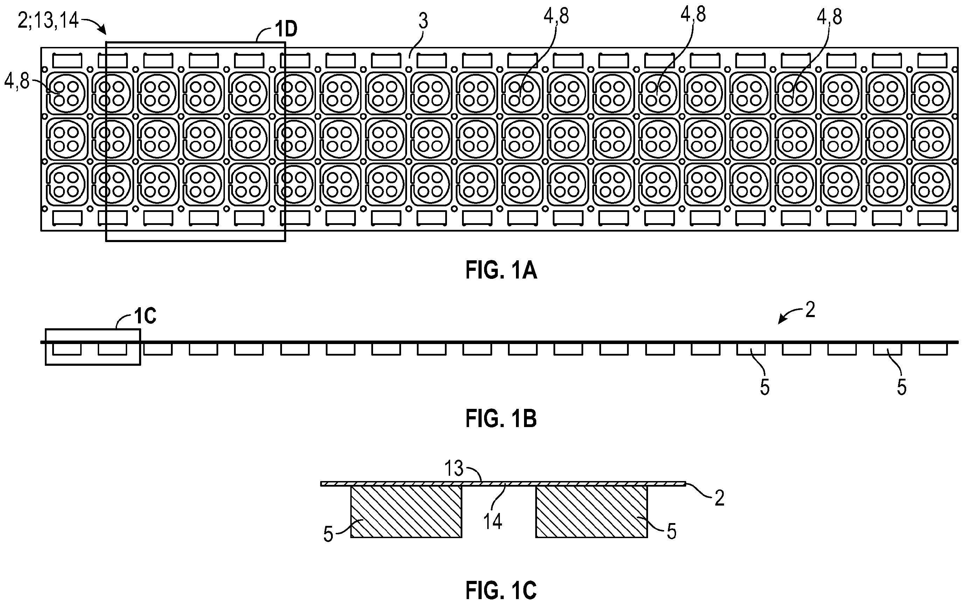

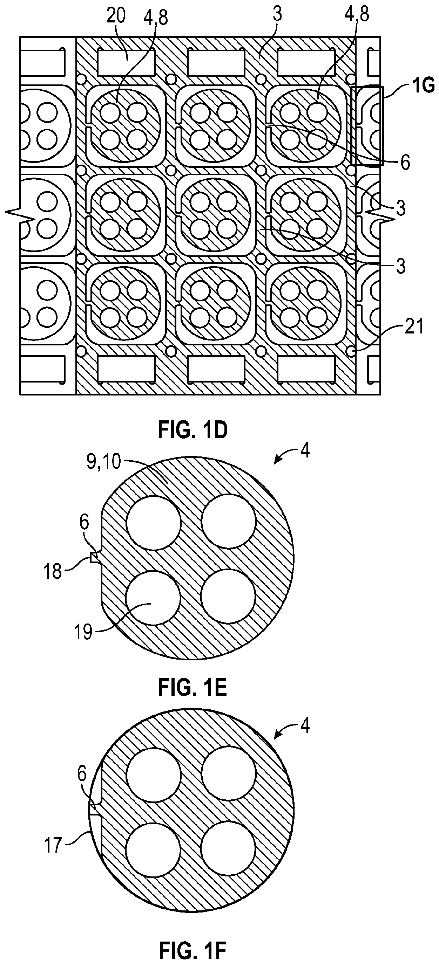

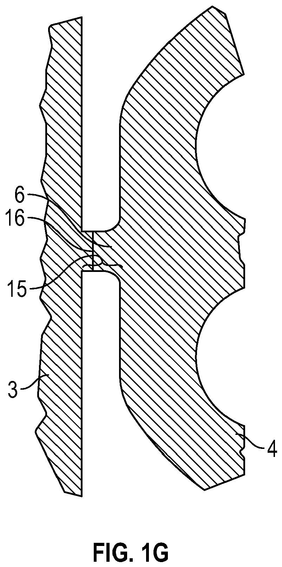

Figures 1A - 1G schematically show a first embodiment of a continuous metal strip 2 of the present disclosure and a connecting element 4 made from the metal strip. Figure 1A schematically shows a top view of the metal strip 2. Figure 1B schematically shows a side view of one of the two lateral sides of the metal strip 2. Figure 1C shows a detail of Figure 1B. Figure 1D shows a detail of Figure 1A. Figure 1E schematically shows a connecting element 4 made from the metal strip 2 of Figures 1A - 1D. Figure 1F shows the drawing of the connecting element 4 of Figure 1E with its circumscribing circle 17. Figure 1G shows a detail of Figure 1D. The metal strip 2 comprises a support structure 3 and a plurality of connecting elements 4. The support structure 3 is located at both lateral sides of the metal strip 2 and between both lateral sides in the form of a grid with paths parallel to the lateral sides and with paths perpendicular to the lateral sides of the metal strip (see Figure 1A, 1D). In Figure 1D, a section of the metal strip including nine connecting elements 4 and the support structure 3 is shown as a hatched area for better visibility of the structures made from metal (hatched area) of the metal strip 2, with the white areas enclosed by the hatched area being air space. Each connecting element 4 is associated with one holding arm 6 integrally linking the connecting element to the support structure 3 (see Figure 1D). Each connecting element 4 is a flat element. The metal strip 2 comprises a plurality of extensions 5 being directed out of the plane of the metal strip 2, in a direction perpendicular to the plane of the metal strip 2 (see Figures 1B, 1C). The extensions 5 may be formed by cutting three sides of a rectangular shape 20 into the metal strip and bending down the rectangular shape at the fourth side of the rectangular shape (see Figure 1C, 1D). In the example of Figures 1A - 1D, the fourth side of the rectangular shape is at the outer side towards the lateral side of the metal strip 2. The support structure 3 may further include small holes 21 which can be used to transport the metal strip 2 on a device for machining the metal strip.

The metal strip 2 has a first surface 13 on one side of the metal strip 2 and a second surface 14 on an opposite side of the metal strip 2. Figure 1A also represents the top view of the first surface 13 of the metal strip 2. The plurality of extensions 5 is provided on the second surface 14 of the metal strip 2. The top view of the second surface 14 of the metal strip 2 is the same as the top view of the first surface of the metal strip, as the plurality of extensions 5 is directed out of the plane of the metal strip 2 in a direction perpendicular to the plane of the metal strip 2. The thickness of the metal strip 2 is 0.16 mm. The thickness of the metal strip is measured perpendicular to the first and second surface 13, 14 of the metal strip 2. The thickness may also be from 0.04 to 1.2 mm. The minimum width 16 of each of the holding arms 6 measured on the first or the second surface 13, 14 of the metal strip 2 is 0.6 mm (see the detail of Figure 1G and Figure 1F). The length 15 of each of the holding arms 6 measured on the first or the second surface 13, 14 of the metal strip 2 is 0.5 mm (see Figures 1G, 1F). The diameter of the circumscribing circle 17 of the connecting element 4 may be 25 mm.

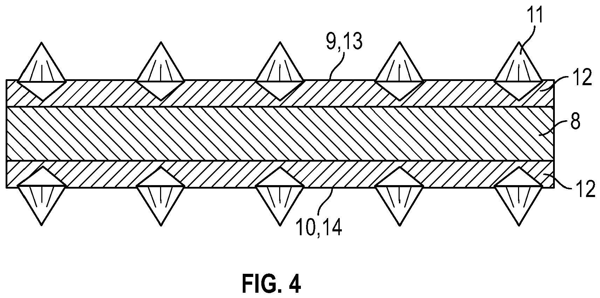

Figure 4 schematically shows a cross-sectional view of the connecting element 4 of Figures 1A, 1E. Each connecting element 4 comprises a metal substrate 8 having a first joining surface 9 on one side of the substrate and a second joining surface 10 on an opposite side of the substrate, wherein each joining surface 9, 10 comprises hard particles 11 fixed on the metal substrate 8 by a binder layer 12, which may be a metallic binder layer 12.

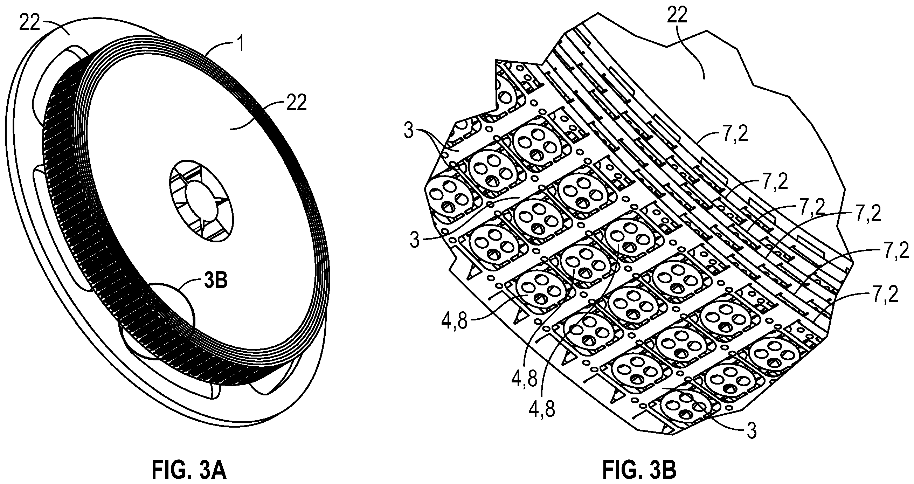

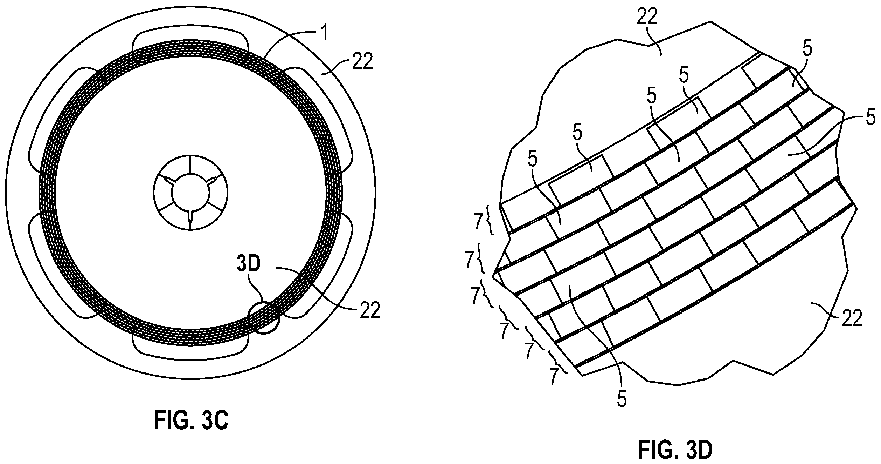

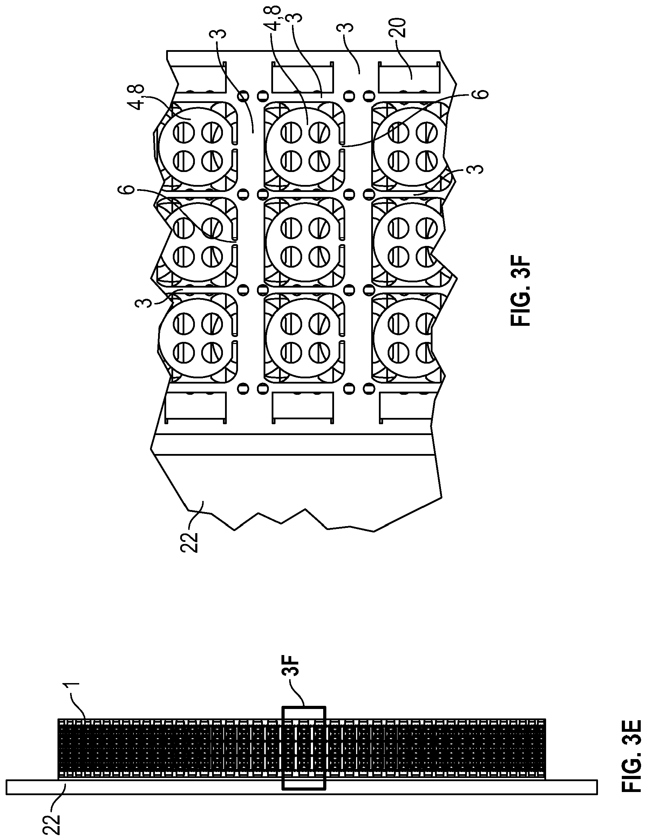

Figures 3A - 3F show a wound roll made by rolling up the metal strip 2 of Figures 1A - 1G. Figure 3A shows a 3D view of the wound roll, Figure 3B shows a detail of Figure 3A, Figure 3C shows a top view of the wound roll, Figure 3D shows a detail of Figure 3C, Figure 3E shows a side view of the wound roll, and Figure 3F shows a detail of Figure 3E. For producing the wound roll of Figures 3A - 3F, a metal strip 2 as shown in Figures 1A - 1G is machined from a continuous metal strip having a thickness of 0.1 mm, or from 0.01 to 1 mm. Machining of the metal strip may be done, for example, by punching or stamping or die cutting, or by laser cutting, or by waterjet cutting, or by electrical discharge machining (EDM), and by subsequent bending. The plurality of extensions directed out of the plane of the metal strip are typically formed by bending. Bending can be done manually or semi-manually or in an automated process. A typical process for machining of the metal strip is a combined stamping and bending process.

The machined metal strip 2 comprises the support structure 3, a plurality of metal substrates 8, each individual metal substrate being a metal substrate for a connecting element 4, and a plurality of extensions 5 being directed out of the plane of the metal strip 2, in a direction perpendicular to the plane of the metal strip 2. Each metal substrate 8 is associated with one holding arm 6 integrally linking the metal substrate 8 to the support structure 3 (Figure 1D). The metal strip 2 has a first surface 13 on one side of the metal strip and a second surface 14 on an opposite side of the metal strip 2. The plurality of extensions 5 is provided on the second surface 14 of the metal strip 2 (Figure 1C). After machining of the metal strip 2, the metal strip 2 is rolled up to a wound roll 1 (see Figures 3A - 3F; Figure 3F shows the detail of Figure 1D after rolling up to the wound roll). The metal strip 2 may be rolled up on a suitable carrier 22 as shown in Figures 3A, 3C and 3E, comprising a central piece onto which the metal strip is rolled up and two symmetrical cover plates. One of the two cover plates of the carrier 22 has been omitted in the figures to better show the wound roll. The wound roll comprises a plurality of individual windings 7 of the metal strip (Figures 3B, 3D). Each individual winding 7 is adjacent to and kept at a distance from an adjacent individual winding by the extensions 5 of the metal strip 2 (Figure 3D). As a next step, hard particles 11 are fixed on the first and the second surface 13, 14 of the metal strip 2 with a metallic binder layer 12, to form the wound roll 1 of connecting elements 4. The hard particles 11 may be diamond particles, for example, and may be fixed on the first and second surfaces 13, 14 of the metal strip 2 with the metallic binder layer 12 by an electroless plating process. Figures 3A - 3F shows the wound roll 1 after the step of fixing hard particles 11 on the first and the second surface 13, 14 of the metal strip 2 with a metallic binder layer 12, and Figures 3A - 3F also show the wound roll before fixing hard particles on the first and the second surface of the metal strip with a metallic binder layer 12, i.e. a wound roll comprising the support structure 3, a plurality of metal substrates 8, and a plurality of extensions 5 being directed out of the plane of the metal strip, with each individual metal substrate 8 being a metal substrate for a connecting element 4. Figures 1A - 1D and 1G show the metal strip 2 after the step of fixing hard particles 11 on the first and the second surface 13, 14 of the metal strip 2 with a metallic binder layer 12, and Figures 1A - 1D and 1G also show the metal strip before fixing hard particles on the first and the second surface of the metal strip with a metallic binder layer 12, i.e. a metal strip comprising the support structure 3, a plurality of metal substrates 8, and a plurality of extensions 5 being directed out of the plane of the metal strip, with each individual metal substrate 8 being a metal substrate for a connecting element 4.

In a further process step, the connecting elements 4 are separated from the support structure 3 at the holding arms 6 at a position having a minimum width 16 of the individual holding arm 6, to form a plurality of individual connecting elements 4 (Figures 1G, 1D). The separation may be carried out manually by breaking off the individual connecting elements at the holding arms, or by an automated process such as punching or stamping, or by laser cutting, or by waterjet cutting, or by electrical discharge machining (EDM).

A top view of one of the three connecting elements 4 after separation from the support structure 3 is shown in Figure 1E. The connecting element 4 comprises a portion of one of the holding arms 6 which is extending from the connecting element 4. The connecting element 4 comprises a separation edge 18. The separation edge 18 is located at the portion of the holding arm 6 which is extending from the connecting element 4. The separation edge 18 is a result of the separation of the connecting element 4 from the support structure 3. The separated connecting element 4 comprises a zone which is located at the separation edge 18 with the metal substrate 8 not comprising hard particles 11 fixed on each joining surface 9, 10 of the metal substrate 8 with a metallic binder layer 12, i.e. this zone is not coated by hard particles 11 fixed by a metallic binder layer 12. The zone which is located at the separation edge 18 and which is not coated by hard particles 11 fixed by a metallic binder 12 layer comprises the separation edge 18. The separation edge 18 is perpendicular or largely perpendicular to the first and second joining surfaces 9, 10 of the connecting element 4 (as Figure 1E shows a top view of the connecting element 4, Figure 1E also represents a top view of the first joining surface 9 of the connecting element 4, which is the same as the top view of the second joining surface 10 of the connecting element 4). The zone which is located at the separation edge 18 and which is not coated by hard particles fixed by a metallic binder layer may further comprise portions of the first or second surfaces 9, 10 of the connecting element 4, as these portions of the coating comprising the hard particles and the metallic binder layer may have peeled off by separating the connecting element 4 from the support structure 3. These portions of the zone at the separation edge which are not coated by hard particles fixed by a metallic binder layer and which are on the first or second surfaces of the connecting element are not shown in Figure 1E and are relatively small compared to the total surface area of the first or second surface of the connecting element. As the total surface area of the zone at the separation edge which is not coated by hard particles fixed by a metallic binder layer is relatively small, it is ensured that the friction-enhancing function of the connecting element is not adversely affected.

The connecting element 4 may also comprise holes 19 (Figure 1E), which serve to insert bolts or screw shafts for mechanically joining the connecting element 4 with two components to be frictionally joined. One of the two components is in contact with the first surface 9 of the connecting element 4, while the other one of the two components is in contact with the second surface 10 of the connecting element 4.

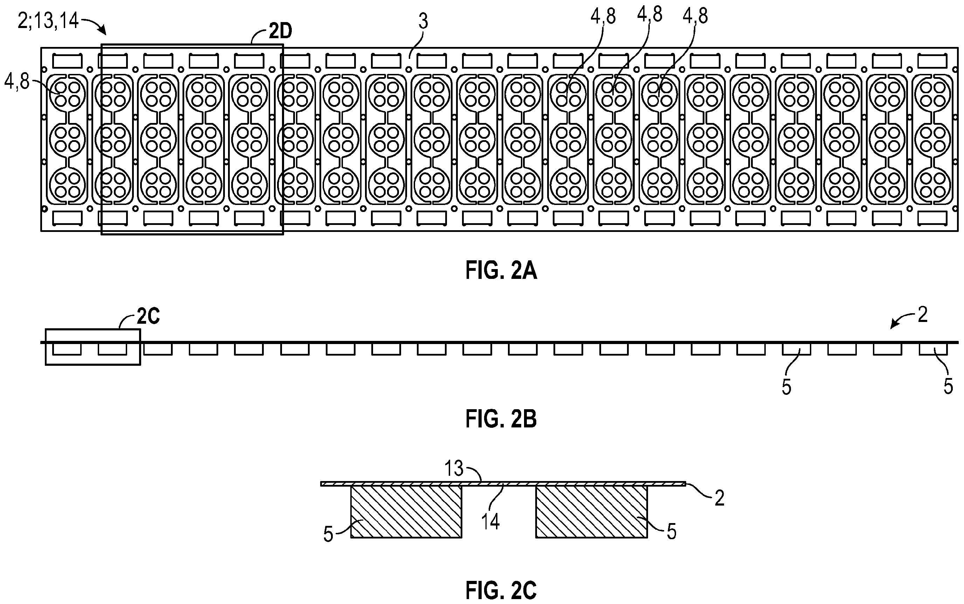

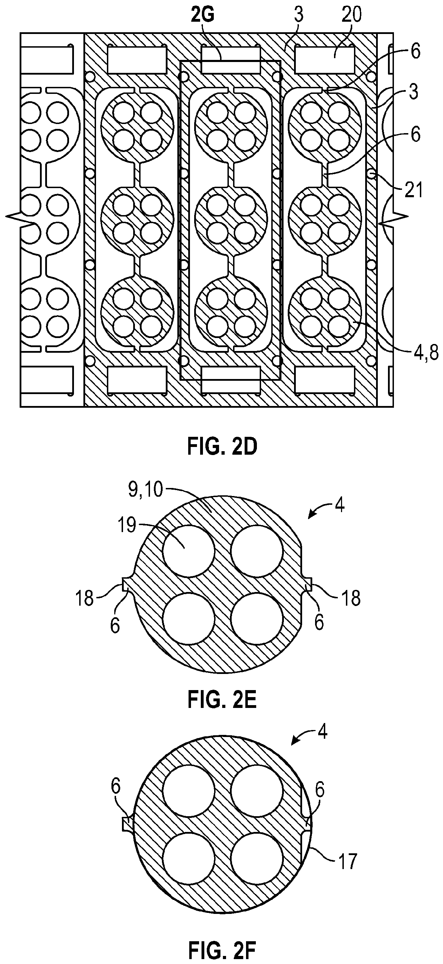

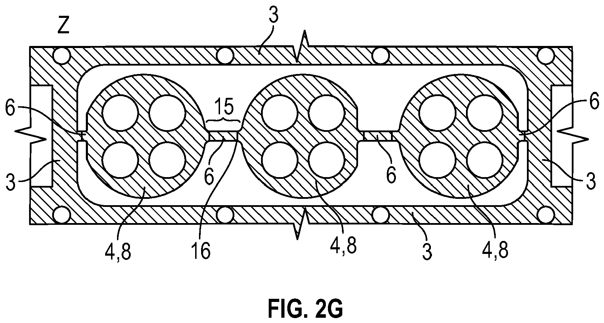

Figures 2A - 2G schematically show a second embodiment of a continuous metal strip 2 of the present disclosure and a connecting element 4 made from the metal strip. Figure 2A schematically shows a top view of the metal strip 2. Figure 2B schematically shows a side view of one of the two lateral sides of the metal strip 2. Figure 2C shows a detail of Figure 2B. Figure 2D shows a detail of Figure 2A. Figure 2E schematically shows a connecting element 4 made from the metal strip 2 of Figures 2A - 2D. Figure 2F shows the drawing of the connecting element 4 of Figure 2E with its circumscribing circle 17. Figure 2G shows a detail of Figure 2D. The metal strip 2 comprises a support structure 3 and a plurality of connecting elements 4. The support structure 3 is located at both lateral sides of the metal strip 2 and between both lateral sides in the form of a plurality of parallel paths that are perpendicular to the lateral sides of the metal strip and that are bridging the two lateral sides of the metal strip (see Figure 2A, 2D). In Figure 1D, a section of the metal strip including nine connecting elements 4 and the support structure 3 is shown as a hatched area for better visibility of the structures made from metal (hatched area) of the metal strip 2, with the white areas enclosed by the hatched area being air space. Each connecting element 4 is associated with two holding arms 6 integrally linking the connecting element to the support structure 3 or to an adjacent connecting element (see Figure 2D). There are three connecting elements in one row perpendicular to the lateral sides of the metal strip. The two connecting elements in each of the rows that are adjacent to one of the lateral sides of the metal strip are integrally linked with one of the holding arms to the support structure 3 at the lateral side of the metal strip, and they are integrally linked with another holding arm to the adjacent connecting element in the middle of each row. Each connecting element 4 is a flat element. The metal strip 2 comprises a plurality of extensions 5 being directed out of the plane of the metal strip 2, in a direction perpendicular to the plane of the metal strip 2 (see Figures 2B, 2C). The extensions 5 may be formed by cutting three sides of a rectangular shape 20 into the metal strip and bending down the rectangular shape at the fourth side of the rectangular shape (see Figure 2C, 2D). In the example of Figures 2A - 2D, the fourth side of the rectangular shape is at the outer side towards the lateral side of the metal strip 2. The support structure 3 may further include small holes 21 which can be used to transport the metal strip 2 on a device for machining the metal strip.

The metal strip 2 has a first surface 13 on one side of the metal strip 2 and a second surface 14 on an opposite side of the metal strip 2. Figure 2A also represents the top view of the first surface 13 of the metal strip 2. The plurality of extensions 5 is provided on the second surface 14 of the metal strip 2. The top view of the second surface 14 of the metal strip 2 is the same as the top view of the first surface of the metal strip, as the plurality of extensions 5 is directed out of the plane of the metal strip 2 in a direction perpendicular to the plane of the metal strip 2. The thickness of the metal strip 2 is 0.16 mm. The thickness of the metal strip is measured perpendicular to the first and second surface 13, 14 of the metal strip 2. The thickness may also be from 0.04 to 1.2 mm. The minimum width 16 of each of the holding arms 6 measured on the first or the second surface 13, 14 of the metal strip 2 is 0.6 mm (see the detail of Figure 2G and Figure 2F). The length 15 of each of the holding arms 6 measured on the first or the second surface 13, 14 of the metal strip 2 is 0.5 mm (see Figures 2G, 2F). The diameter of the circumscribing circle 17 of the connecting element 4 may be 25 mm.

The cross-sectional view of the connecting element 4 shown in Figure 4 also represents a cross-sectional view of the connecting element 4 of Figures 2A - 2G. Each connecting element 4 comprises a metal substrate 8 having a first joining surface 9 on one side of the substrate and a second joining surface 10 on an opposite side of the substrate, wherein each joining surface 9, 10 comprises hard particles 11 fixed on the metal substrate 8 by a binder layer 12, which may be a metallic binder layer 12.

From the metal strip 2 of Figures 2A - 2G, a wound roll is formed as explained above for the metal strip 2 of Figures 1A - 1G. The metal strip 2 is obtained by machining a metal strip having a thickness of 0.1 mm, or from 0.01 to 1 mm. After rolling up the metal strip to a wound roll, hard particles are fixed on the first and the second surface 13, 14 of the metal strip 2 with a metallic binder layer 12, as described above for the wound roll of Figures 3A - 3F, to form the wound roll 1 of connecting elements 4. Figures 2A - 2D and 2G show the metal strip 2 after the step of fixing hard particles 11 on the first and the second surface 13, 14 of the metal strip 2 with a metallic binder layer 12, as well as the metal strip before fixing hard particles on the first and the second surface of the metal strip with a metallic binder layer 12, i.e. a metal strip comprising the support structure 3, a plurality of metal substrates 8, and a plurality of extensions 5 being directed out of the plane of the metal strip, with each individual metal substrate 8 being a metal substrate for a connecting element 4.

In a further process step, the connecting elements 4 are separated from the support structure 3 at the two holding arms 6 of each connecting element 4 at a position having a minimum width 16 of the individual holding arm 6, as shown in Figure 2G, to form a plurality of individual connecting elements 4. The separation may be carried out by punching or stamping, for example.

A top view of one of the three connecting elements 4 after separation from the support structure 3 is shown in Figure 2E. As can be seen in this figure, the connecting element 4 comprises two portions of a holding arm 6 which are extending from the connecting element 4. The connecting element 4 comprises two separation edges 18, each of them being located at one of the two portions of a holding arm 6 which are extending from the connecting element 4. The separation edges 18 are a result of the separation of the connecting element 4 from the support structure 3. At each of the two separation edges 18, the separated connecting element 4 comprises a zone with the metal substrate 8 not comprising hard particles 11 fixed on each joining surface 9, 10 of the metal substrate 8 with a metallic binder layer 12, i.e. these zones are not coated by hard particles 11 fixed by a metallic binder layer 12. The zone which is located at the separation edge 18 and which is not coated by hard particles 11 fixed by a metallic binder 12 layer comprises the separation edge 18. The separation edge 18 is perpendicular or largely perpendicular to the first and second joining surfaces 9, 10 of the connecting element 4 (as Figure 2E shows a top view of the connecting element 4, Figure 2E also represents a top view of the first joining surface 9 of the connecting element 4, which is the same as the top view of the second joining surface 10 of the connecting element 4). The zone which is located at the separation edge 18 and which is not coated by hard particles fixed by a metallic binder layer may further comprise portions of the first or second surfaces 9, 10 of the connecting element 4, as these portions of the coating comprising the hard particles and the metallic binder layer may have peeled off by separating the connecting element 4 from the support structure 3. These portions of the zone at the separation edge which are not coated by hard particles fixed by a metallic binder layer and which are on the first or second surfaces of the connecting element are not shown in Figure 2E and are relatively small compared to the total surface area of the first or second surface of the connecting element. As the total surface area of the zone at the separation edge which is not coated by hard particles fixed by a metallic binder layer is relatively small, it is ensured that the friction-enhancing function of the connecting element is not adversely affected.

The connecting element 4 may also comprise holes 19, which serve to insert bolts or screw shafts for mechanically joining the connecting element 4 with two components to be frictionally joined. One of the two components is in contact with the first surface 9 of the connecting element 4, while the other one of the two components is in contact with the second surface 10 of the connecting element 4.

The connecting element made from a wound roll as disclosed herein can be used to connect a first component and a second component to be joined in machine, plant or motor vehicle construction, in energy generation, or in microelectronic or mircromechanic equipment. The connecting element made from a wound roll as disclosed herein can be used for friction-increasing connection of a first component and a second component to be joined in machine, plant or motor vehicle construction, in energy generation, or in microelectronic or mircromechanic equipment. The connecting element made from a wound roll as disclosed herein can be used for friction-increasing, play-free and/or reversible connection of a first and a second component to be joined in machine, plant or motor vehicle construction, in energy generation, or in microelectronic or mircromechanic equipment.

In principle, the connecting element disclosed herein can be used in any type of frictional connection throughout the field of mechanical engineering.

For example, the connecting element disclosed herein can be used for frictional connections, such as bolted or clamped connections, between parts or components of vehicles, or in microelectronic or mircromechanic equipment.

## Claims

1. A wound roll (1) of connecting elements, the wound roll comprising a continuous metal strip (2) comprising
(i) a support structure (3),
(ii) a plurality of connecting elements (4), and
(iii) a plurality of extensions (5) being directed out of the plane of the metal strip (2);
wherein each connecting element (4) is associated with at least one holding arm (6) integrally linking the connecting element to at least one of
(a) the support structure (3) and
(b) one or more other connecting elements (4),
and wherein the wound roll (1) comprises a plurality of individual windings (7) of the metal strip (2), and wherein each individual winding (7) is adjacent to and kept at a distance from an adjacent individual winding (7) by the extensions (5) of the metal strip (2),
and wherein each connecting element (4) comprises a metal substrate (8) having a first joining surface (9) on one side of the substrate and a second joining surface (10) on an opposite side of the substrate, wherein each joining surface (9, 10) comprises hard particles (11) fixed on the metal substrate (8) by a binder layer (12).

2. The wound roll (1) of claim 1, wherein the metal strip (2) has a first surface (13) on one side of the metal strip and a second surface (14) on an opposite side of the metal strip, and wherein each individual holding arm (6) has a cross section that is perpendicular to the first and the second surface (13, 14) of the metal strip, and wherein a minimum cross-sectional area of each individual holding arm (6) is between 0.005 and 10 mm².

3. The wound roll (1) of claim 1 or 2, wherein the metal strip (2) has a first surface (13) on one side of the metal strip and a second surface (14) on an opposite side of the metal strip, and wherein a minimum width of each individual holding arm measured on the first or the second surface of the metal strip is between 0.1 and 10 mm.

4. The wound roll (1) of any one of claims 1 to 3, wherein the thickness of the metal strip (2) is from 0.04 to 1.2 mm.

5. The wound roll (1) of any one of claims 1 to 4, wherein the plurality of extensions (5) is directed out of the plane of the metal strip (2) in a direction enclosing an angle of at least 20°, or of at least 45°, or of at least 90°, or of at least 135°, with the plane of the metal strip (2).

6. The wound roll of (1) any one of claims 1 to 5, wherein the plurality of extensions (5) is directed out of the plane of the metal strip (2) in a direction perpendicular to the plane of the metal strip (2).

7. The wound roll (1) of any one of claims 1 to 6, wherein each individual winding (7) of the wound roll is kept at a constant distance to the adjacent windings.

8. The wound roll (1) of any one of claims 1 to 7, wherein the distance between adjacent individual windings (7) of the wound roll is at least one time the thickness of the metal strip (2).

9. The wound roll (1) of any one of claims 1 to 8, wherein the hard particles (11) are selected from the group comprising silicon carbide, aluminum oxide, boron carbide, cubic boron nitride, and diamond.

10. A process for producing a wound roll (1) of connecting elements (4) according to any of claims 1 to 9, the process comprising
(a) providing a metal strip (2) having a first surface (13) on one side of the metal strip and a second surface (14) on an opposite side of the metal strip,
(b) machining the metal strip (2), to form a metal strip comprising
(i) a support structure (3),
(ii) a plurality of metal substrates (8), each individual metal substrate being a metal substrate for a connecting element (4), and
(iii) a plurality of extensions (5),
wherein each metal substrate (8) is associated with at least one holding arm (6) integrally linking the metal substrate to at least one of
(A) the support structure (3) and
(B) one or more other metal substrates (8);
and wherein the plurality of extensions (5) is provided on at least one of the two opposite surfaces (13, 14) of the metal strip (2), and wherein each extension (5) is directed out of the plane of the metal strip (2),
(c) rolling up the metal strip (2) to a wound roll, wherein the wound roll comprises a plurality of individual windings (7) of the metal strip, and wherein each individual winding (7) is adjacent to and kept at a distance from an adjacent individual winding by the extensions (5) of the metal strip (2), and
(d) fixing hard particles (11) on the first and the second surface (13, 14) of the metal strip (2) with a binder layer (12), to form the wound roll (1) of connecting elements (4).

11. The process of claim 10, further comprising
(e) separating each connecting element (4) from the support structure (3) or from one or more other connecting elements (4), to form a plurality of individual connecting elements (4).

12. The process of claim 11, wherein each connecting element (4) is separated from the support structure (3) or from one or more connecting elements (4) at the holding arms (6), preferably at a position having a minimum width (16) of the individual holding arm (6).

13. The process of claim 12, wherein each individual connecting element (4) of the plurality of connecting elements comprises at least one portion of a holding arm (6) which is extending from the connecting element (4).

14. The process of claim 13, wherein each individual connecting element (4) of the plurality of connecting elements comprises at least one separation edge (18), wherein the separation edge is located at the portion of the holding arm (6) which is extending from the connecting element (4), and wherein the connecting element comprises a zone which is located at the separation edge with the metal substrate (8) not comprising hard particles (11) fixed on each joining surface (9, 10) of the metal substrate with a binder layer (12).

15. Use of a connecting element (4) made from a wound roll (1) according to any of claims 1 to 9 to connect a first component and a second component to be joined in machine, plant or motor vehicle construction, in energy generation, or in microelectronic or mircromechanic equipment.

## Patentansprüche

1. Eine gewickelte Rolle (1) von Verbindungselementen, wobei die gewickelte Rolle ein fortlaufendes Metallband (2) aufweist, aufweisend
(i) eine Stützstruktur (3),
(ii) eine Mehrzahl von Verbindungselementen (4), und
(iii) eine Mehrzahl von Verlängerungen (5), die aus der Ebene des Metallbandes (2) gerichtet sind;
wobei jedes Verbindungselement (4) mindestens einem Haltearm (6) zugeordnet ist, der das Verbindungselement einstückig verbindet mit mindestens einem von
(a) der Stützstruktur (3) und
(b) einem oder mehreren anderen Verbindungselementen (4),
und wobei die gewickelte Rolle (1) eine Mehrzahl von einzelnen Windungen (7) des Metallbandes (2) aufweist, und wobei jede einzelne Windung (7) zu einer benachbarten einzelnen Windung (7) benachbart ist und durch die Verlängerungen (5) des Metallbandes (2) in einem Abstand zu dieser gehalten wird,
und wobei jedes Verbindungselement (4) ein Metallsubstrat (8) aufweist, das eine erste Fügeoberfläche (9) auf einer Seite des Substrats und eine zweite Fügeoberfläche (10) auf einer gegenüberliegenden Seite des Substrats aufweist, wobei jede Fügeoberfläche (9, 10) Hartpartikel (11) aufweist, die auf dem Metallsubstrat (8) durch eine Bindemittelschicht (12) befestigt sind.

2. Die gewickelte Rolle (1) nach Anspruch 1, wobei das Metallband (2) eine erste Oberfläche (13) auf einer Seite des Metallbandes und eine zweite Oberfläche (14) auf einer gegenüberliegenden Seite des Metallbandes aufweist, und wobei jeder einzelne Haltearm (6) einen Querschnitt aufweist, der senkrecht zu der ersten und der zweiten Oberfläche (13, 14) des Metallbandes ist, und wobei eine Mindestquerschnittsfläche jedes einzelnen Haltearms (6) zwischen 0,005 und 10 mm² liegt.

3. Die gewickelte Rolle (1) nach Anspruch 1 oder 2, wobei das Metallband (2) eine erste Oberfläche (13) auf einer Seite des Metallbandes und eine zweite Oberfläche (14) auf einer gegenüberliegenden Seite des Metallbandes aufweist, und wobei eine Mindestbreite jedes einzelnen Haltearms, gemessen aufder ersten oder der zweiten Oberfläche des Metallbandes, zwischen 0,1 und 10 mm ist.

4. Die gewickelte Rolle (1) nach einem der Ansprüche 1 bis 3, wobei die Dicke des Metallbandes (2) von 0,04 bis 1,2 mm ist.

5. Die gewickelte Rolle (1) nach einem der Ansprüche 1 bis 4, wobei die Mehrzahl von Verlängerungen (5) aus der Ebene des Metallbandes (2) in eine Richtung gerichtet ist, die einen Winkel von mindestens 20°, oder von mindestens 45°, oder von mindestens 90°, oder von mindestens 135° mit der Ebene des Metallbandes (2) einschließt.

6. Die gewickelte Rolle (1) nach einem der Ansprüche 1 bis 5, wobei die Mehrzahl von Verlängerungen (5) aus der Ebene des Metallbandes (2) in eine Richtung senkrecht zu der Ebene des Metallbandes (2) gerichtet ist.

7. Die gewickelte Rolle (1) nach einem der Ansprüche 1 bis 6, wobei jede einzelne Windung (7) der gewickelten Rolle in einem konstanten Abstand zu den benachbarten Windungen gehalten wird.

8. Die gewickelte Rolle (1) nach einem der Ansprüche 1 bis 7, wobei der Abstand zwischen benachbarten einzelnen Windungen (7) der gewickelten Rolle mindestens einmal die Dicke des Metallbandes (2) ist.

9. Die gewickelte Rolle (1) nach einem der Ansprüche 1 bis 8, wobei die Hartpartikel (11) aus der Gruppe ausgewählt sind, die Siliciumcarbid, Aluminiumoxid, Borcarbid, kubisches Bornitrid und Diamant umfasst.

10. Ein Verfahren zur Herstellung einer gewickelten Rolle (1) von Verbindungselementen (4) nach einem der Ansprüche 1 bis 9, das Verfahren aufweisend
(a) Bereitstellen eines Metallbandes (2) das eine erste Oberfläche (13) auf einer Seite des Metallbandes und eine zweite Oberfläche (14) auf einer gegenüberliegenden Seite des Metallbandes aufweist,
(b) Bearbeiten des Metallbandes (2), um ein Metallband auszubilden, aufweisend
(i) eine Stützstruktur (3),
(ii) eine Mehrzahl von Metallsubstraten (8), wobei jedes einzelne Metallsubstrat ein Metallsubstrat für ein Verbindungselement (4) ist, und
(iii) eine Mehrzahl von Verlängerungen (5),
wobei jedes Metallsubstrat (8) mindestens einem Haltearm (6) zugeordnet ist, der das Metallsubstrat einstückig verbindet mit mindestens einem von
(A) der Stützstruktur (3) und
(B) einem oder mehreren anderen Metallsubstraten (8);
und wobei die Mehrzahl von Verlängerungen (5) an mindestens einer der beiden gegenüberliegenden Oberflächen (13, 14) des Metallbandes (2) bereitgestellt ist, und wobei jede Verlängerung (5) aus der Ebene des Metallbandes (2) gerichtet ist,
(c) Aufrollen des Metallbandes (2) zu einer gewickelten Rolle, wobei die gewickelte Rolle eine Mehrzahl von einzelnen Windungen (7) des Metallbandes aufweist, und wobei jede einzelne Windung (7) zu einer benachbarten einzelnen Windung benachbart ist und durch die Verlängerungen (5) des Metallbandes (2) in einem Abstand zu dieser gehalten wird, und
(d) Fixieren von Hartpartikeln (11) auf der ersten und der zweiten Oberfläche (13, 14) des Metallbandes (2) mit einer Bindemittelschicht (12), um die gewickelte Rolle (1) von Verbindungselementen (4) auszubilden.

11. Das Verfahren nach Anspruch 10, ferner aufweisend
(e) Trennen jedes Verbindungselements (4) von der Stützstruktur (3) oder von einem oder mehreren Verbindungselementen (4), um eine Mehrzahl von einzelnen Verbindungselementen (4) auszubilden.

12. Das Verfahren nach Anspruch 11, wobei jedes Verbindungselement (4) von der Stützstruktur (3) oder von einem oder mehreren Verbindungselementen (4) an den Haltearmen (6) getrennt wird, vorzugsweise an einer Position, die eine Mindestbreite (16) des einzelnen Haltearms (6) aufweist.

13. Das Verfahren nach Anspruch 12, wobei jedes einzelne Verbindungselement (4) der Mehrzahl von Verbindungselementen mindestens einen Abschnitt eines Haltearms (6), der sich von dem Verbindungselement (4) erstreckt, aufweist.

14. Das Verfahren nach Anspruch 13, wobei jedes einzelne Verbindungselement (4) der Mehrzahl von Verbindungselementen mindestens eine Trennkante (18) aufweist, wobei sich die Trennkante an dem Abschnitt des Haltearms (6) befindet, der sich von dem Verbindungselement (4) erstreckt, und wobei das Verbindungselement eine Zone aufweist, die sich an der Trennkante befindet, und bei der das Metallsubstrat (8) keine Hartpartikel (11) aufweist, die auf jeder Fügeoberfläche (9, 10) des Metallsubstrats mit einer Bindemittelschicht (12) befestigt sind.

15. Verwendung eines Verbindungselements (4), das aus einer gewickelten Rolle (1) nach einem der Ansprüche 1 bis 9 hergestellt ist, um ein erstes Bauteil und ein zweites Bauteil zu verbinden, die in der Maschinen-, Anlagen- oder Motorfahrzeugkonstruktion, in der Energieerzeugung oder in mikroelektronischen oder mikromechanischen Geräten verbunden werden sollen.

## Revendications

1. Rouleau enroulé (1) d'éléments de liaison, le rouleau enroulé comprenant une bande métallique continue (2) comprenant
(i) une structure de support (3),
(ii) une pluralité d'éléments de liaison (4), et
(iii) une pluralité d'extensions (5) étant dirigées hors du plan de la bande métallique (2) ;
dans lequel chaque élément de liaison (4) est associé à au moins un bras de maintien (6) reliant intégralement l'élément de liaison à au moins l'un parmi
(a) la structure de support (3) et
(b) un ou plusieurs autres éléments de liaison (4),
et dans lequel le rouleau enroulé (1) comprend une pluralité d'enroulements individuels (7) de la bande métallique (2), et dans lequel chaque enroulement individuel (7) est adjacent à et maintenu à une distance d'un enroulement individuel (7) adjacent par les extensions (5) de la bande métallique (2),
et dans lequel chaque élément de liaison (4) comprend un substrat métallique (8) ayant une première surface de jonction (9) sur un côté du substrat et une seconde surface de jonction (10) sur un côté opposé du substrat, dans lequel chaque surface de jonction (9, 10) comprend des particules dures (11) fixées sur le substrat métallique (8) par une couche de liant (12).

2. Rouleau enroulé (1) selon la revendication 1, dans lequel la bande métallique (2) a une première surface (13) sur un côté de la bande métallique et une seconde surface (14) sur un côté opposé de la bande métallique, et dans lequel chaque bras de maintien individuel (6) a une section transversale qui est perpendiculaire à la première et à la seconde surface (13, 14) de la bande métallique, et dans lequel une aire en coupe transversale minimale de chaque bras de maintien individuel (6) est comprise entre 0,005 et 10 mm².

3. Rouleau enroulé (1) selon la revendication 1 ou 2, dans lequel la bande métallique (2) a une première surface (13) sur un côté de la bande métallique et une seconde surface (14) sur un côté opposé de la bande métallique, et dans lequel une largeur minimale de chaque bras de maintien individuel mesurée sur la première ou la seconde surface de la bande métallique est comprise entre 0,1 et 10 mm.

4. Rouleau enroulé (1) selon l'une quelconque des revendications 1 à 3, dans lequel l'épaisseur de la bande métallique (2) va de 0,04 à 1,2 mm.

5. Rouleau enroulé (1) selon l'une quelconque des revendications 1 à 4, dans lequel la pluralité d'extensions (5) est dirigée hors du plan de la bande métallique (2) dans une direction renfermant un angle d'au moins 20°, ou d'au moins 45°, ou d'au moins 90°, ou d'au moins 135°, avec le plan de la bande métallique (2).

6. Rouleau enroulé (1) selon l'une quelconque des revendications 1 à 5, dans lequel la pluralité d'extensions (5) est dirigée hors du plan de la bande métallique (2) dans une direction perpendiculaire au plan de la bande métallique (2).

7. Rouleau enroulé (1) selon l'une quelconque des revendications 1 à 6, dans lequel chaque enroulement individuel (7) du rouleau enroulé est maintenu à une distance constante par rapport aux enroulements adjacents.

8. Rouleau enroulé (1) selon l'une quelconque des revendications 1 à 7, dans lequel la distance entre des enroulements individuels (7) adjacents du rouleau enroulé est au moins une fois l'épaisseur de la bande métallique (2).

9. Rouleau enroulé (1) selon l'une quelconque des revendications 1 à 8, dans lequel les particules dures (11) sont choisies dans le groupe comprenant du carbure de silicium, de l'oxyde d'aluminium, du carbure de bore, du nitrure de bore cubique et du diamant.

10. Procédé de production d'un rouleau enroulé (1) d'éléments de liaison (4) selon l'une quelconque des revendications 1 à 9, le procédé comprenant
(a) la fourniture d'une bande métallique (2) ayant une première surface (13) sur un côté de la bande métallique et une seconde surface (14) sur un côté opposé de la bande métallique,
(b) l'usinage de la bande métallique (2), pour former une bande métallique comprenant
(i) une structure de support (3),
(ii) une pluralité de substrats métalliques (8), chaque substrat métallique individuel étant un substrat métallique pour un élément de liaison (4), et
(iii) une pluralité d'extensions (5),
dans lequel chaque substrat métallique (8) est associé à au moins un bras de maintien (6) reliant intégralement le substrat métallique à au moins l'un parmi
(A) la structure de support (3) et
(B) un ou plusieurs autres substrats métalliques (8) ;
et dans lequel la pluralité d'extensions (5) est prévue sur au moins l'une des deux surfaces opposées (13, 14) de la bande métallique (2), et dans lequel chaque extension (5) est dirigée hors du plan de la bande métallique (2),
(c) l'enroulement de la bande métallique (2) sur un rouleau enroulé, dans lequel le rouleau enroulé comprend une pluralité d'enroulements individuels (7) de la bande métallique, et dans lequel chaque enroulement individuel (7) est adjacent à et maintenu à une distance d'un enroulement individuel adjacent par les extensions (5) de la bande métallique (2), et
(d) la fixation de particules dures (11) sur la première et la seconde surface (13, 14) de la bande métallique (2) avec une couche de liant (12), pour former le rouleau enroulé (1) d'éléments de liaison (4).

11. Procédé selon la revendication 10, comprenant en outre
(e) la séparation de chaque élément de liaison (4) de la structure de support (3) ou d'un ou plusieurs autres éléments de liaison (4), pour former une pluralité d'éléments de liaison (4) individuels.

12. Procédé selon la revendication 11, dans lequel chaque élément de liaison (4) est séparé de la structure de support (3) ou d'un ou de plusieurs éléments de liaison (4) au niveau des bras de maintien (6), de préférence au niveau d'une position ayant une largeur minimale (16) du bras de maintien individuel (6).

13. Procédé selon la revendication 12, dans lequel chaque élément de liaison (4) individuel de la pluralité d'éléments de liaison comprend au moins une partie d'un bras de maintien (6) qui s'étend à partir de l'élément de liaison (4).

14. Procédé selon la revendication 13, dans lequel chaque élément de liaison (4) individuel de la pluralité d'éléments de liaison comprend au moins un bord de séparation (18), dans lequel le bord de séparation est situé au niveau de la partie du bras de maintien (6) qui s'étend à partir de l'élément de liaison (4), et dans lequel l'élément de liaison comprend une zone qui est située au niveau du bord de séparation avec le substrat métallique (8) ne comprenant pas de particules dures (11) fixées sur chaque surface de jonction (9, 10) du substrat métallique avec une couche de liant (12).

15. Utilisation d'un élément de liaison (4) fabriqué à partir d'un rouleau enroulé (1) selon l'une quelconque des revendications 1 à 9 pour relier un premier composant et un second composant à joindre dans une construction de machine, d'installation ou d'automobile, dans la génération d'énergie, ou dans un équipement microélectronique ou micromécanique.
